# NOUVEAU FASCICULE DE BREVET EUROPEEN

(11) **EP 2 531 041 B2**
(45) Date de publication et mention de la décision concernant l'opposition: **08.02.2023**
(45) Mention de la délivrance du brevet: 11.05.2016
(21) Numéro de dépôt: 11707453.4
(22) Date de dépôt: 03.02.2011
(51) Int. Cl.: A23G 1/44

(54) **CONFISERIES AUX PROTEINES DE POIS**
SÜSSWARE MIT ERBSENPROTEINEN
CONFECTIONARY CONTAINING PEA PROTEINS

(30) Priorité: 03.02.2010 FR 1050740
(43) Date de publication de la demande: 12.12.2012
(73) Titulaire: Roquette Frères, 62136 Lestrem (FR)
(72) Inventeur: CHOROMANSKI, Pierre, F-59100 Roubaix (FR); MULLER, Elsa, F-62920 Gonnehem (FR); PARADY, Thomas, Batavia, Illinois 60510 (US)
(74) Mandataire: Plasseraud IP
(86) Numéro de dépôt international: PCT/FR2011/050213
(87) Numéro de publication internationale: WO 2011/095740

(56) Documents cités:
- WO-A1-01/52670
- WO-A1-2009/001063
- WO-A1-2010/100368
- WO-A2-2005/089255
- US-A1- 2003 054 088
- US-A1- 2004 142 093
- US-A1- 2006 188 644
- NUNES M C ET AL: "Gelled vegetable desserts containing pea protein, [kappa]-carrageenan and starch", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE LNKD- DOI:10.1007/S00217-005-0170-3, vol. 222, no. 5-6, 1 mars 2006 (2006-03-01), pages 622-628, XP019328323, ISSN: 1438-2385
- CHAN A S M ET AL: "A non-dairy frozen dessert utilizing pea protein isolate and hydrogenated canola oil.", FOOD TECHNOLOGY 1992 DEP. OF FOOD SCI., UNIV. OF MANITOBA, WINNIPEG, MAN. R3T 2N2, CANADA, vol. 46, no. 1, 1992, page 88, XP009138842,
- DATABASE GNPD [en ligne] MINTEL Janvier 2006 'Caramel Bars' Database accession no. 501067
- DATABASE GNPD [en ligne] MINTEL Juin 2006 'Caramel Bar' Database accession no. 545213
- DATABASE GNPD [en ligne] MINTEL Janvier 2004 'Chocolate Fudge Bar' Database accession no. 10158188
- DATABASE GNPD [en ligne] MINTEL Octobre 2007 'Peanut Fudge Granola Bar' Database accession no. 798387
- DATABASE GNPD [en ligne] MINTEL Janvier 2010 'Crunchy Chocolates Assortment' Database accession no. 1228085
- DATABASE GNPD [en ligne] MINTEL Janvier 2010 'Milk Chocolate Meal Replacement Bars' Database accession no. 1259687
- DATABASE GNPD [en ligne] MINTEL Avril 2007 'Protein Bar with Dark Chocolate' Database accession no. 690317

## Description

### DOMAINE TECHNIQUE DE L'INVENTION

La présente invention a pour objet des confiseries traditionnellement au lait selon les revendications.

### ART ANTERIEUR

Les produits de confiserie sont nombreux. Ils ont tous en commun la cuisson du sucre et son mélange avec d'autres ingrédients pour obtenir des spécialités et des parfums différents. Les « confiseries traditionnellement au lait » sont tous les produits de confiserie contenant traditionnellement du sucre et au moins des protéines de lait. C'est le cas notamment pour les caramels tendres ou durs, les toffées, les fudges, les bonbons au lait, les crumbs, les fourrages cuits au lait pour confiserie, les fourrages gras au lait, les sauces sucrées cuites au lait pour coulis ou nappages, les confitures de lait, les pâtes à tartiner au lait, les chocolats blancs ou au lait et les produits dérivés du chocolat blanc ou au lait, par exemple les ganaches, les pralines, les chocolats de couverture, les tablettes, les bonbons, les bouchées, les truffes, les lentilles, les vermicelles et les fourrages au chocolat blanc ou au lait (liquides, pâteux, solides, en poudre...).

De manière générale, les confiseries au lait sont obtenues à partir d'un mélange de protéines laitières (caséines et protéines du lactosérum) avec des glucides réducteurs (sucres et sirop de glucose) et des matières grasses (végétales et/ou animales), ledit mélange étant chauffé. La température du chauffage dépend du type de confiserie souhaitée. Typiquement, les chocolats blancs ou au lait et les produits dérivés du chocolat blanc ou au lait sont chauffés à une température comprise entre 40 °C et 80 °C, tandis que les autres confiseries, comme les caramels tendres ou durs, les toffées, ou les fudges, sont chauffés à une température comprise entre 80 °C et 150 °C. Au cours de cette étape de chauffage, les protéines laitières réagissent avec les autres ingrédients et en particulier avec les glucides réducteurs pour donner au final une masse de couleur, texture et saveur typiques du caramel ou de la toffée. La texture et la fermeté de ces produits traditionnels sont déterminées par les températures finales de cuisson, alors que l'arôme et la couleur sont dus à la spécificité des ingrédients utilisés et l'ordre d'addition de ces dits ingrédients au mélange.

Dans toutes les confiseries traditionnellement au lait concernées par la présente invention, le lait est donc typiquement le complément indispensable des glucides. Son rôle est technologiquement très important, notamment car il permet de développer en cours de la cuisson le goût particulier inimitable que prend le lait lorsqu'il est cuit en présence de sucres. Ce phénomène est particulièrement bien connu sous le nom de réaction de Maillard.

La réaction de Maillard est une réaction chimique complexe de brunissement au cours de laquelle les groupements actifs des glucides réducteurs et des acides aminés des protéines réagissent entre eux pour donner naissance à des produits de polymérisation, les mélanoïdines, qui confèrent au caramel sa teinte et son goût typique.

Bien que la présence des protéines de lait soit indispensable pour la formation de l'intensité de couleur et de goût dans les confiseries contenant traditionnellement du lait, cette présence peut également engendrer des problèmes d'allergies. En effet, les protéines animales issues du lait peuvent être allergènes, entraînant des réactions très gênantes, voire même dangereuses au quotidien.

L'allergie aux produits laitiers est une des réactions allergiques les plus répandues. Les études démontrent que 65 % des personnes qui souffrent d'allergies alimentaires sont allergiques au lait. La forme adulte de l'allergie au lait, appelée ici « allergie aux produits laitiers », est une réaction du système immunitaire qui crée des anticorps pour combattre l'aliment indésirable. Cette allergie est différente de l'allergie aux protéines du lait de vache (protéines bovines), qui touche les nouveau-nés et les enfants. L'allergie aux produits laitiers cause des symptômes variés tels que constipation, diarrhée, flatulences, eczéma, urticaire, nausées, migraines, infections, crampes abdominales, congestion nasale et même de graves crises d'asthme. Les personnes allergiques doivent complètement éliminer le lait, les produits laitiers et leurs dérivés de leur alimentation.

Un autre problème majeur lié aux protéines laitières est leur coût qui ne cesse d'augmenter. L'application des quotas laitiers a provoqué d'une part une réduction drastique de la quantité de protéines laitières disponible pour la fabrication de produits alimentaires et d'autre part de fortes fluctuations de leurs prix.

Enfin, en remplaçant les protéines laitières donc d'origine animale dans une confiserie traditionnelle au lait, ladite confiserie finalement obtenue pourra également être consommée par les personnes végétariennes qui ne souhaitent pas consommer de protéines animales, de quelque origine et sous quelque forme que se soient.

Au vu de tous les désavantages, tant économiques, environnementaux que nutritionnels liés à la consommation de protéines laitières, il en résulte un grand intérêt pour l'emploi de protéines de substitution.

Cependant, cette substitution n'est pas évidente car les protéines de lait jouent un rôle essentiel dans le goût, la couleur, la tenue, la masticabilité et la stabilité au stockage desdites confiseries. Les tentatives par le passé de substitution des protéines laitières dans les confiseries traditionnellement au lait n'ont pas toujours eu beaucoup de succès.

La demande de brevet US 2006/0188644 décrit de bons résultats en substituant les protéines de lait par des protéines de blé dans un caramel. Cependant, cette solution n'est pas satisfaisante, car les protéines de blé sont, comme les protéines de lait, fortement allergènes.

### RESUME DE L'INVENTION

Il est du mérite de la Demanderesse d'avoir découvert que les protéines de pois pouvaient, de façon surprenante, remplacer avantageusement les protéines de lait dans des confiseries traditionnellement au lait, tout en conservant des qualités organoleptiques, en particulier gustatives, olfactives, visuelles et tactiles, au moins équivalentes, voire supérieures, à celles de la confiserie traditionnelle contenant du lait.

La présente invention a pour objet une confiserie traditionnellement au lait comprenant de 0,5 % à 16 % de protéines de pois, de façon préférée de 1 % à 16 %, de façon encore plus préférée de 2 % à 16 %, les pourcentages étant exprimés en poids sec, par rapport au poids sec total de la confiserie.

En outre, la présente invention a pour objet un procédé de préparation desdites confiseries, ce procédé comprenant l'étape consistant à cuire une préparation de confiseries traditionnellement au lait comprenant des protéines de pois.

### DESCRIPTION DETAILLEE

La présente invention a pour objet des confiseries traditionnellement au lait selon les revendications.

Au sens de la présente invention, l'expression « confiseries traditionnellement au lait » désigne des produits de confiserie cuits contenant traditionnellement des glucides réducteurs et au moins des protéines de lait. Les confiseries traditionnellement au lait selon l'invention sont choisies dans le groupe constitué des crumbs, des chocolats blancs ou au lait et des produits dérivés du chocolat blanc ou au lait, par exemple les ganaches, les pralines, les chocolats de couverture, les tablettes, les bonbons, les bouchées, les truffes, les lentilles, les vermicelles et les fourrages au chocolat blanc ou au lait (liquides, pâteux, solides, en poudre...). On peut distinguer les confiseries traditionnellement au lait qui sont chauffées à une température comprise entre 40 °C et 80 °C, comme les chocolats blancs ou au lait et les produits dérivés du chocolat blanc ou au lait, et celles qui sont chauffées à une température comprise entre 80 °C et 150 °C, comme les caramels tendres ou durs, les toffées et les fudges. Les confiseries traditionnellement au lait qui sont préférées dans la présente invention sont les chocolats blancs ou au lait.

Des exemples de confiseries traditionnellement au lait sont décrits dans l'ouvrage intitulé « Guide technologique de la confiserie industrielle» , par Ph. BRYSELBOUT et Y. FABRY, publié par la Société d'Edition et de Promotion Agro-Alimentaires, Industrielles et Commerciales (SEPAIC), Tome 1, 1984, ISBN 2-903-899-05-X.

Le chocolat est une confiserie sucrée produite à partir des fèves de cacao qui sont nettoyées, fermentées, torréfiées, concassées et broyées pour donner la pâte de cacao. De cette pâte de cacao sont extraits par pression d'une part la matière grasse également appelée beurre de cacao, et d'autre part les tourteaux servant eux-mêmes à la fabrication de la poudre de cacao. Dans la présente invention, seuls les chocolats au lait et chocolats blancs sont concernés car le chocolat noir ne contient pas de protéines de lait.

Les constituants de base du chocolat au lait sont la pâte de cacao, le beurre de cacao, le sucre et les composés lactés sous différente forme : le lait lui-même ou les composés provenant de la déshydratation partielle ou entière du lait entier ou du lait partiellement ou entièrement écrémé et éventuellement de crème, de crème partiellement ou entièrement déshydratée, de beurre ou de graisse butyrique. Il répond aux caractéristiques suivantes : pas moins de 25 % et pas plus de 40 % de matière sèche totale de cacao, pas moins de 2,5 % de cacao dégraissé, pas moins de 14 % de matière sèche totale d'origine lactique, pas moins de 3,5 % de graisse butyrique, pas moins de 25 % de matières grasses totales et pas plus de 55 % de sucres. Il est en outre procédé à des ajouts de lécithine et parfois d'arômes.

Le chocolat blanc est constitué quant à lui de beurre de cacao, de lait et de sucre et éventuellement d'arômes et de lécithine. Il ne contient pas de pâte de cacao.

La réalisation de chocolat blanc et de chocolat au lait passe par un mélange des différents ingrédients qui est réalisé dans un pétrin à une température voisine de 50°C, suivi d'un broyage-affinage conférant au chocolat sa finesse, d'un conchage et d'un tempérage. Le conchage est encore actuellement une étape très importante de la fabrication du chocolat. Il permet entre autre d'obtenir une diminution de la teneur en eau de la pâte et favorise la formation de composés aromatiques résultant de la réaction de Maillard, composés conférant des notes sensorielles particulières au chocolat. Le tempérage consiste à amener le beurre de cacao sous sa forme cristalline la plus stable et donne au chocolat un aspect brillant et lisse, une dureté et un fondant caractéristique, ainsi qu'une plus longue durée de conservation.

Dans un procédé particulier d'application courante, produisant un chocolat au lait d'arôme caramélisé, fruité et non lacté très apprécié des consommateurs, le mélange brut de chocolat est constitué de « crumb », de sucre et de beurre de cacao. On prépare le crumb en traitant thermiquement le lait sous forme liquide ou concentrée, en y ajoutant du sucre, en concentrant sous vide, en mélangeant le lait concentré sucré et éventuellement la pâte de cacao (selon que l'on désire préparer un crumb pour chocolat au lait ou pour chocolat blanc), puis en séchant complètement ce mélange sous vide, c'est à dire avec une teneur en eau résiduelle de 1,5 % en poids au maximum. Le crumb se présente sous la forme d'une masse dure foncée que l'on broie finement, que l'on met dans des sacs étanches à l'humidité et que l'on entrepose dans un local sec tempéré. Cette masse se conserve longtemps et développe un arôme typique de crumb avec en plus une note lactée après plusieurs mois d'entreposage, produit par auto-lipolyse enzymatique. Ce crumb peut-être utilisé comme un produit intermédiaire dans la fabrication du chocolat au lait et du chocolat blanc. Dans pareil cas, on mélange le crumb avec les autres ingrédients comme le beurre de cacao ou la pâte de cacao (pour le chocolat au lait) avant le broyage-affinage, conchage et tempérage.

La ganache est une préparation épaisse de chocolat servant à garnir une confiserie ou une pâtisserie. Dans sa forme la plus simple, la ganache est un mélange de crème (ou parfois de lait ou de beurre, voire d'un mélange des trois) et de chocolat, généralement en quantité environ égales. Elle s'obtient en versant le liquide bouilli sur le chocolat tout en remuant délicatement avec de petites oscillations concentriques. En refroidissant, la masse prend une texture épaisse voire solide. La recette varie selon l'usage : plus il y a de chocolat par rapport à la crème, plus la ganache est solide.

De manière générale, ces différentes confiseries peuvent également contenir divers éléments destinés soit à améliorer la qualité, soit à les aromatiser, tel que :
- les fruits secs, tels que les amandes, noisettes, noix, pistaches, noix de pécan, pignons de pin, arachides...,
- les fruits confits, qui sont des fruits cuits dans du sirop de sucre auquel on ajoute, pour empêcher la cristallisation, du miel ou plus généralement du glucose ; il s'agit notamment des abricots, poires, prunes, cerises, ananas, écorces d'agrumes...,
- les fruits séchés ou autrement transformés (pressés, concentrés, en poudre) ; il s'agit par exemple de papaye séchée en cubes, de fruits secs râpés, abricots lyophilisés, pépites à l'ananas, raisins secs...,
ainsi que les purées de fruits, pulpes de fruits, arômes, chocolat, café, vanille, sel.

Dans la présente invention, le terme « glucide réducteur » désigne les glucides dont le carbone 1 portant le groupement hydroxyle hémiacétalique n'est pas engagé dans une liaison (la fonction hémiacétalique est donc libre). En particulier, le glucose, l'arabinose, le xylose, le mannose, le galactose, le dextrose, le fructose, le lactose et le maltose sont des glucides réducteurs.

Dans la présente invention, le terme « pois » est considéré dans son acception la plus large et inclut en particulier :
- toutes les variétés sauvages de pois lisse (« smooth pea ») et de pois ridé (« wrinkled pea »), et
- toutes les variétés mutantes de pois lisse et de pois ridé, par exemple ceux décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Les protéines de pois sont constituées, comme toutes les protéines de légumineuses, de trois classes de protéines principales: les globulines, les albumines et les protéines dites « insolubles ».

Les protéines de pois présentent un profil en acides aminés très particulier, différent de celui des protéines de lait ou d'autres protéines végétales. Le profil en acides aminé de protéines de pois est en particulier riche :
- en arginine, qui joue un rôle important dans l'effort physique et dans le maintien du système immunitaire. Les protéines de pois contiennent plus d'arginine que la plupart des autres protéines végétales ou animales.
- en lysine, qui joue un rôle important dans la croissance des êtres vivants, en particulier dans la croissance osseuse,
- en acides aminés possédant une chaîne ramifiée (isoleucine, leucine et valine) qui aident au maintien et à la (re)construction des tissus musculaires,
- en glutamine et en acide glutamique, qui sont une source d'énergie pour les muscles.

Malgré le fait que les protéines de pois et les protéines de lait présentent des compositions éloignées, le remplacement total ou partiel des protéines de lait par des protéines de pois dans les confiseries traditionnellement au lait ne modifie ni l'aspect, ni le toucher, ni l'odeur, ni le goût, ni la texture de ces confiseries.

En particulier, les chocolats obtenus comprenant des protéines de pois conservant :
- à la vue : une surface lisse et brillante,
- à l'odorat : une odeur douce, fruitée et très agréable,
- au gout : une onctuosité, une rondeur en bouche et un aspect crémeux,
ces caractéristiques étant recherchées et très appréciées des consommateurs de chocolat.

D'un point de vu technologique, ce remplacement des protéines de lait par des protéines de pois ne modifie pas significativement le comportement rhéologique des préparations qui sont mises en oeuvre. Le comportement rhéologique peut être quantifié par deux mesures : la valeur de la viscosité et la valeur du seuil d'écoulement. Dans le domaine agroalimentaire de la confiserie, le modèle théorique généralement employé est le modèle de Casson.

Le comportement des confiseries lors de leur fabrication n'est pas modifié. Il n'y aura donc pas besoin de modifier les paramètres du procédé de fabrication.

L'intérêt des protéines de pois réside surtout dans leur absence d'allergènicité. Elles ont en outre de bonnes capacités émulsifiantes, et un coût faible, ce qui en fait un ingrédient fonctionnel économique.

Les protéines de pois selon l'invention peuvent être utilisées pour la fabrication de la confiserie sous la forme de compositions de protéines de pois. Par composition de protéines, on entend au sens de la présente invention une composition présentant une teneur en protéines totales (N x 6,25), exprimée en grammes de produit sec, d'au moins 60 % en poids de produit sec.

Pour déterminer le taux de protéines totales, on effectue le dosage de la fraction azotée soluble contenue dans l'échantillon selon la méthode de Dumas A., 1826, Annales de chimie, 33, 342, comme cité par Buckee, 1994, dans Journal of the Institute of Brewing, 100, pp 57-64, puis on obtient le taux de protéines totales en multipliant le taux d'azote exprimé en pourcentage de poids de produit sec par le facteur 6,25. Cette méthode, également connue comme méthode de dosage de l'azote par combustion, consiste en une combustion totale de la matrice organique sous oxygène. Les gaz produits sont réduits par du cuivre puis desséchés et le gaz carbonique est piégé. L'azote est ensuite quantifié à l'aide d'un détecteur universel. Cette méthode est bien connue de l'homme du métier.

De préférence, on utilise dans le cadre de la présente invention une composition de protéines de pois ayant une teneur en protéines élevée comprise entre 55 % et 99 % en poids de produit sec, plus préférentiellement encore comprise entre 76 % et 95 %, et en particulier comprise entre 78 % et 92 %.

Les compositions de protéines de pois qui pourront être utilisées selon l'invention peuvent être des « concentrats de protéines de pois » ou des « isolats de protéines de pois ». Les concentrats et les isolats de protéines de pois sont définis en regard de leur contenu en protéines (cf la revue de J. GUEGUEN de 1983 dans Proceedings of european congress on plant proteins for human food (3-4) pp 267 - 304):
- les concentrats de protéines de pois sont décrits comme présentant un contenu en protéines totales de 60 à 75 % sur sec, et
- les isolats de protéines de pois sont décrits comme présentant un contenu en protéines totales de 90 à 95 % sur sec,
les teneurs en protéines étant mesurées par la méthode de Dumas (cf. référence ci-avant), la teneur en azote étant multipliée par le facteur 6,25.

Dans un autre mode de réalisation de la présente invention, les compositions de protéines de pois pouvant être utilisées peuvent également être des « hydrolysats de protéines de pois ». Les hydrolysats de protéines de pois sont définis comme des préparations obtenues par hydrolyse par voie enzymatique, par voie chimique, ou par les deux voies simultanément ou successivement, de protéines de pois. Les hydrolysats de protéines se composent d'un mélange de peptides de différentes tailles et d'acides aminés libres. Cette hydrolyse peut avoir un impact sur la solubilité des protéines. L'hydrolyse enzymatique et/ou chimique est par exemple décrite dans la demande de brevet WO 2008/001183.

Les procédés de préparation d'hydrolysats de protéines sont bien connus de l'homme du métier et peuvent par exemple comprendre les étapes suivantes : dispersion des protéines dans l'eau pour obtenir une suspension, hydrolyse de cette suspension par le traitement choisi. Le plus souvent, il s'agira d'un traitement enzymatique combinant un mélange de différentes protéases, éventuellement suivi d'un traitement thermique destiné à inactiver les enzymes encore actives. La solution obtenue peut ensuite être filtrée sur une ou plusieurs membranes de façon à séparer les composés insolubles, éventuellement l'enzyme résiduelle et les peptides de haut poids moléculaire (supérieur à 10 000 daltons).

Selon un mode optionnel de réalisation de l'invention, les compositions de protéines de pois précédemment décrites (concentrats, isolats, hydrolysats) pourront également subir un traitement thermique à température élevé et pendant un temps court afin de réduire les risques bactériologiques, ledit traitement pouvant être choisi parmi les traitements HTST (High Temperature Short Time) et UHT (Ultra Haute Température).

De préférence, la composition de protéines de pois utilisée selon l'invention présente une teneur en protéines solubles, exprimée selon le test A de mesure de la solubilité dans l'eau des protéines, comprise entre 20 et 99 %, plus préférentiellement entre 45 et 90 %, plus préférentiellement encore entre 50 et 86 %, et en particulier entre 55 et 75 %.

Le test A pour la détermination du taux de protéines solubles est le suivant : Dans un bécher de 400 ml, on introduit 200,0 g d'eau distillée à 20°C +/- 2°C dont le pH est ajusté à 7,5 +/- 0, 1, et on place le tout sous agitation magnétique (barreau aimanté et rotation à 200 rpm). On ajoute exactement 5 g de l'échantillon à analyser. On agite pendant 30 min, et on centrifuge pendant 15 min à 4000 rpm. On mesure, sur le surnageant la teneur en protéines solubles dans l'eau selon la méthode de Dumas précédemment évoquée.

En outre, ces compositions de protéines de pois utilisées selon l'invention présente de manière préférée un profil de distribution des poids moléculaires constitué de :
- 1 % à 8 %, de préférence de 1,5 % à 4 % de protéines de plus de 100000 Daltons,
- 20 % à 55 %, de préférence de 25 % à 55 % de protéines de plus de 15000 et d'au plus de 100000 Daltons,
- 15 % à 30 % de protéines de plus de 5000 et d'au plus de 15000 Daltons, et
- 25 % à 55 %, de préférence de 25 % à 50 % de protéines d'au plus de 5000 Da.

La détermination des poids moléculaires des protéines constitutives desdites compositions de protéines de pois est réalisée par chromatographie d'exclusion stérique en conditions dénaturantes (SDS + 2-mercaptoéthanol); la séparation se fait en fonction de la taille des molécules à séparer, les molécules de taille élevée étant éluées en premier.

Des exemples de compositions de protéines de pois selon l'invention, ainsi que le détail de la méthode de détermination des poids moléculaires peuvent être trouvés dans la demande de brevet WO 2007/017572 dont la Société Demanderesse est également titulaire.

Selon un autre mode optionnel de réalisation de la présente invention, les protéines de pois utilisées pour substituer les protéines de lait sont apportées sous forme d'un lait végétal.

Dans la présente demande, la dénomination « lait végétal » est utilisée et concerne une boisson qui n'est pas issue du lait d'origine animale, et plus particulièrement du lait de vache.

Dans un mode préféré de la présente invention, ledit lait végétal est préparé avec une composition de protéines de pois telle que décrite ci-dessus, et ne contient que des ingrédients végétaux.

Dans un second mode préféré de la présente invention, ledit lait végétal utilisé comprend une solution aqueuse d'une composition de protéines de pois et d'au moins un hydrolysat d'amidon

Dans un autre mode préféré de la présente invention, les protéines de pois utilisées pour substituer les protéines de lait sont apportées sous forme d'une poudre granulée de lait végétal qui comprend au moins une composition de protéines de pois, de préférence telle que décrite ci-dessus, et au moins un hydrolysat d'amidon, et qui est caractérisé en ce qu'elle présente un diamètre moyen volumique laser D4,3 compris entre 10mm et 500mm, de préférence entre 50mm et 350mm et encore plus préférentiellement entre 70mm et 250mm, et une matière sèche, déterminée après étuvage à 130°C pendant 2 heures, supérieure à 80%, de préférence supérieure à 85%, et encore plus préférentiellement supérieure à 90%.

Qui plus est, ladite poudre granulée est de préférence caractérisée en ce que le ratio pondéral de la protéine de pois à l'hydrolysat d'amidon est compris entre 99:1 et 1:99, de préférence entre 80:20 et 20:80, plus préférentiellement encore entre 65:35 et 35:65 et en particulier entre 55:45 et 45:55. Enfin, ladite poudre granulée est de préférence caractérisée en ce que la somme des quantités de protéine de pois et d'hydrolysat d'amidon est comprise entre 30 et 100%, et de préférence entre 50 et 100% de la masse totale de ladite poudre granulée (sec/sec).

Lorsque les protéines de pois sont apportées sous forme d'un lait végétal, ledit lait végétal est de préférence obtenu par dissolution de ladite poudre de lait végétal décrite ci-dessus dans tout liquide potable destiné à la consommation humaine, et caractérisé de préférence en ce que le taux de dissolution de la poudre granulée de lait végétal est compris entre 2 et 30% en poids sec, de préférence entre 2 et 20%, plus préférentiellement encore entre 3 et 15%, et en particulier entre 5 et 10%.

Dans la présente demande, le terme « hydrolysat d'amidon » désigne tout produit obtenu par hydrolyse acide ou enzymatique d'amidon de légumineuses, de céréales ou de tubercules. Divers procédés d'hydrolyse sont connus et ont été décrits de manière générale aux pages 511 et 512 de l'ouvrage Encyclopedia of Chemical Technology de Kirk-Othmer, 3ème Edition, Vol. 22, 1978. Ces produits d'hydrolyse se définissent également comme des mélanges purifiés et concentrés formés de chaînes linéaires constituées d'unités D-glucose et de polymères de D-glucose essentiellement lié en α(1→4) avec seulement de 4 à 5 % de liaisons glucosidiques ramifiées α(1→6), de poids moléculaires extrêmement variés, complètement solubles dans l'eau. Les hydrolysats d'amidon sont très bien connus et parfaitement décrits dans Encyclopedia of Chemical Technology de Kirk-Othmer, 3ème Edition, Vol. 22, 1978, pp. 499 à 521.

Ainsi, dans la présente invention, le produit d'hydrolyse de l'amidon est choisi parmi les maltodextrines, les sirops de glucose, le dextrose (forme cristallisée du α-D-glucose) et leurs mélanges quelconques.

La distinction entre les produits d'hydrolyse de l'amidon repose principalement sur la mesure de leur pouvoir réducteur, exprimé classiquement par la notion de Dextrose Equivalent ou DE. Le DE correspond à la quantité de sucres réducteurs, exprimée en équivalent dextrose pour 100g de matière sèche du produit. Le DE mesure donc l'intensité de l'hydrolyse de l'amidon, puisque plus le produit est hydrolysé, plus il contient de petites molécules (telles que le dextrose et le maltose par exemple) et plus son DE est élevé. Au contraire, plus le produit contient de grandes molécules (polysaccharides), plus son DE est bas.

Du point de vue réglementaire, et également au sens de la présente invention, les maltodextrines ont un DE compris de 1 à 20, et les sirops de glucose ont un DE supérieur à 20.

De tels produits sont par exemple les maltodextrines et les sirops de glucose déshydratés commercialisés par la Demanderesse sous les dénominations de GLUCIDEX^{®} (DE disponibles = 1, 2, 6, 9, 12, 17, 19 pour les maltodextrines et DE = 21, 29, 33, 38, 39, 40, 47 pour les sirops de glucose). On peut également citer les sirops de glucose commercialisés par la Demanderesse sous la dénomination « Roquette sirops de glucose ».

Des exemples de compositions de lait végétal obtenu par dissolution de ladite poudre granulée, et susceptible de remplacer totalement ou partiellement des protéines de lait dans une confiserie contenant traditionnellement des protéines de lait, ainsi qu'un procédé d'obtention d'un tel lait végétal, peuvent être trouvés dans la demande de brevet WO 2010/100370 dont la Société Demanderesse est également titulaire.

La présente invention a pour objet une confiserie traditionnellement au lait comprenant de 0,5 % à 16 % de protéines de pois, de façon préférée de 1 % à 16 %, de façon encore plus préférée de 2 % à 16 %, les pourcentages étant calculés en poids sec, par rapport au poids sec total de la confiserie.

La confiserie objet de la présente invention comprend de préférence moins de 30 % de protéines de lait, de façon préférée de 0 % à 20 %, de façon encore plus préférée de 0 % à 16 %, les pourcentages étant calculés en poids, par rapport au poids total de la confiserie.

Les teneurs en protéines de lait et de pois peuvent être mesurées par la méthode de Dumas (cf. référence ci-avant), la teneur en azote étant multiplié par le facteur 6,25.

La substitution des protéines de lait par les protéines de pois peut être partielle ou totale. De préférence, le rapport en poids (protéines de lait)/(protéines de pois) dans la confiserie objet de la présente invention est compris entre 0 et 2, de façon préférée entre 0 et 1, de façon encore plus préférée entre 0 et 0,5.

Selon un mode de réalisation préféré, la confiserie objet de la présente invention est exempte de protéines de lait.

En outre, la présente invention a pour objet un procédé de préparation de confiseries également objets de la présente invention. Ce procédé comprend l'étape consistant à cuire une préparation de confiseries traditionnellement au lait comprenant des protéines de pois. Le taux de protéines de pois dans ladite préparation est ajusté par l'homme du métier de manière à ce que la confiserie obtenue après cuisson comprenne de 0,5 % à 16 % de protéines de pois, de façon préférée de 1 % à 16 %, de façon encore plus préférée de 2 % à 16 %, les pourcentages étant calculés en poids sec, par rapport au poids sec total de la confiserie.

Selon un mode de réalisation préféré, Le procédé selon l'invention comprenant l'étape consistant à cuire une préparation de confiseries traditionnellement au lait comprenant des protéines de pois, ladite préparation étant exempte de protéines de lait.

Des recettes classiques de confiseries traditionnellement au lait sont connues de l'homme du métier. Il pourra par exemple se référer à l'ouvrage intitulé « guide technologique de la confiserie industrielle », par Ph. BRYSELBOUT et Y. FABRY, publié par la Société d'Edition de et Promotion Agro-Alimentaires, Industrielles et Commerciales (SEPAIC), Tome 1, 1984, ISBN 2-902-899-05-X. L'ouvrage intitulé « Sugar Confectionery Recipes and Methods », par E.B. Jackson, publié par Kennedys Publications, London, 2002, contient également de nombreuses recettes de confiseries traditionnelles au lait.

Selon un mode de réalisation, la préparation des confiseries selon l'invention est effectuée selon les recettes classiques, sauf que les protéines de lait qui entrent traditionnellement dans la recette sont remplacées, au moins en partie, par des protéines de pois.

Dans les recettes traditionnelles, les protéines laitières peuvent être apportées sous la forme de lait entier, demi-écrémé ou écrémé, en poudre ou liquide. Dans ce cas, une partie ou la totalité de ce lait peut être remplacée par des protéines de pois, compensant la partie protéique du lait, et par des glucides, compensant le lactose contenu dans le lait. Eventuellement, une matière grasse peut être également ajoutée pour compenser la partie lipidique du lait.

En outre, la confiserie traditionnellement au lait comprenant des protéines de pois selon la présente invention peut également comprendre une fibre végétale.

Dans la présente invention, le terme « fibre végétale » désigne les fibres alimentaires végétales solubles et/ou insolubles. Dans la présente invention, la fibre végétale est choisie parmi les fibres solubles, les fibres insolubles et leurs mélanges quelconques.

Selon un mode de réalisation préférentiel de la présente invention, la confiserie contient des protéines de pois et au moins une fibre végétale soluble.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

De préférence, ladite fibre soluble d'origine végétale est choisie dans le groupe constitué par les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses.

Selon un mode de réalisation particulièrement avantageux de la présente invention, la confiserie comprend des protéines de pois associées à des maltodextrines branchées.

Selon un mode de réalisation de la présente invention, les maltodextrines branchées (MDB) sont les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal. En particulier, on pourra utiliser des MDB présentant entre 15 et 35% de liaisons glucosidiques 1-6, une teneur en sucres réducteurs inférieure à 20%, une masse moléculaire moyenne en poids Mw comprise entre 4000 et 6000 g/mole et une masse moléculaire moyenne en nombre Mn comprise entre 250 et 4500 g/mole. De préférence, les MDB sont des MDB de hauts poids moléculaires présentant une teneur en sucres réducteurs au plus égale à 5 % et un Mn compris entre 2000 et 4500 g/mole.

Dans la présente demande, les pyrodextrines désignent les produits obtenus par chauffage de l'amidon amené à faible taux d'humidité, en présence de catalyseurs acides ou basiques, et présentant généralement un poids moléculaire compris entre 1000 et 6000 daltons.

Le polydextrose est une fibre soluble produite par polymérisation thermique du dextrose, en présence de sorbitol et d'acide comme catalyseur. Un exemple d'un tel produit est par exemple le LITESSE^{®} commercialisé par DANISCO.

Un exemple d'association avec une protéine végétale particulièrement intéressante est l'utilisation de NUTRIOSE^{®}, qui est une gamme complète de fibres solubles, reconnues pour leurs bienfaits, et fabriquées et commercialisées par la Demanderesse. Les produits de la gamme NUTRIOSE^{®} sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE^{®} est l'une des fibres les mieux tolérées disponibles sur le marché. Elle montre une tolérance digestive plus élevée, permettant une meilleure incorporation que d'autres fibres, ce qui représente de vrais avantages alimentaires.

Selon un autre mode avantageux de l'invention, la confiserie contient des protéines de pois et au moins une fibre végétale insoluble.

De préférence, ladite fibre végétale insoluble est choisie dans le groupe constitué par les amidons résistants, les fibres de céréales, les fibres de fruits, les fibres de légumes, les fibres de légumineuses et leurs mélanges. On peut citer par exemple des fibres telles que les fibres de bambou, de pois ou de carotte.

Selon une variante, ladite confiserie contient des protéines de pois et une fibre de légumineuse, préférentiellement une fibre de pois.

Selon une autre variante, ladite confiserie contient des protéines de pois et au moins une fibre végétale insoluble, et de préférence un amidon résistant. On pourra utiliser indifféremment les amidons résistants naturels ou les amidons résistants obtenus par modification chimique, et/ou physique, et/ou enzymatique.

Selon la présente invention, on désigne par amidon résistant, un amidon ou une fraction d'amidon qui n'est pas digérée dans l'intestin grêle et qui est fermentée par les bactéries du colon.

Selon une autre variante, ladite confiserie contient des protéines de pois et un mélange d'au moins un amidon résistant et d'une fibre de pois.

De préférence, on utilisera un amidon résistant issu d'amidon ayant une teneur en amylose supérieure à 50 %. Les amidons riches en amylose EURYLON^{®} commercialisés par la Demanderesse conviennent particulièrement.

Selon un autre mode particulièrement avantageux de l'invention, la confiserie contient des protéines de pois et un mélange de fibres solubles et insolubles.

De façon avantageuse, les fibres solubles sont des maltodextrines branchées lorsque les fibres insolubles sont choisies parmi les fibres de légumineuses et les amidons résistants, ou sont un mélange des deux.

Selon une caractéristique particulièrement avantageuse de l'invention, ladite légumineuse dont sont issues les fibres de légumineuses et les protéines de légumineuses est sélectionnée dans le groupe comprenant la luzerne, le trèfle, le lupin, le pois, le haricot, la fève, la fèverole, la lentille et leurs mélanges.

Selon un autre avantage de la présente invention, la substitution totale des protéines de lait peut être faite par une quantité plus importante de protéines de pois, et la confiserie obtenue pourra alors comporter la mention « sources de protéines ».

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLES

### Exemple 1 Substitution totale des protéines de lait dans un chocolat au lait

### TEMOIN : CHOCOLAT AU LAIT TRADITIONNEL

Un chocolat au lait traditionnel est réalisé avec les ingrédients suivantes :
- Sucre glace : 0 % de MG (matière grasse)
- Pâte de cacao : 54 % de MG
- « Prochoc R26 » : ingrédient commercialisé par la société INGREDIA à Arras (France), constitué de lait entier déshydraté ; 24,5 % de protéines, 37,75 % de lactose, 26 % de MG,
- Beurre de cacao : 100 % de MG
- Lécithine : 100 % de MG.

La recette mise en oeuvre est la suivante :
1. Malaxage des ingrédients du tableau 1 :

**Tableau 1**

| *Ingrédients* | Ingrédients en poids (g) | Composition (%) |
|---|---|---|
| Sucre glace | 840 | 52,08 |
| Pâte de cacao | 220 | 13,64 |
| Prochoc R26 | 450 | 27, 90 |
| Beurre de cacao | 103 | 6,38 |
| Total | 1613 | 100 |

2. Broyage (sur broyeuse tri-cylindres) : pression des rouleaux : 1^{er} passage à 20-30 bars, 2^{ème} passage à 35-45 bars, 3^{ème} passage à 55-60 bars.
3. Conchage : température 55 °C, durée 20 h avec mise en oeuvre des ingrédients figurant dans le tableau 2 :

**Tableau 2**

| *Ingrédients* | Composition (g) |
|---|---|
| Mélange obtenu suite à l'étape de broyage | 1613 |
| Beurre de cacao | 377 |
| Lécithine | 10 |
| Total | 2000 |

Cette recette permet d'obtenir des chocolats au lait dont la composition finale est telle que décrite dans le tableau 3 :

**Tableau 3**

| | | Composition (%) | Ingrédients en poids (g) | MG (%) | Valeur calorique (Kcal) |
|---|---|---|---|---|---|
| Sucre glace | | 42 | 840 | 0,00 | 100,80 |
| Pâte de cacao | | 11 | 220 | 5,94 | 67,10 |
| Prochoc R26 | | *22,5* | *450* | | |
| | *protéines de lait* | *5,5* | *110* | | |
| | *lactose* | *8,5* | *170* | | |
| | *matière grasse* | *5,85* | *117* | 5,85 | 110,25 |
| Beurre de cacao | | 24 | 480 | 24,00 | 216,00 |
| Lécithine | | 0,5 | 10 | 0,50 | 4,50 |
| Total | | 100 | 2000 | 36,29 | 498,65 |

La teneur en humidité résiduelle du chocolat au lait témoin est négligeable. Par conséquent, le chocolat témoin contient 5,5 % de protéines de lait en poids sec.

### ESSAI 1 : CHOCOLAT AU LAIT AUX PROTEINES DE POIS

On réalise un chocolat au lait à partir de la recette traditionnelle du témoin, dans lequel les protéines de lait ont été substituées totalement par des protéines de pois. Les ingrédients mis en oeuvre sont les mêmes, sauf :
- Composition de protéines de pois : 85 % (sec) de protéines de pois,
- « MGLA » : matière grasse laitière anhydre ; 100 % de MG.

Le Prochoc R26 a été supprimé de la recette. Pour compenser le lactose et la matière grasse apportés initialement par le Prochoc R26 dans la formulation du témoin, de la matière grasse laitière anhydre (MGLA) a été rajoutée et la quantité de sucre glace a été adaptée.

Le procédé de préparation est similaire à celui mis en oeuvre pour la réalisation du témoin :
1. Malaxage des ingrédients du tableau 4 :

**Tableau 4**

| *Ingrédients* | Ingrédients en poids (g) | Composition (%) |
|---|---|---|
| Sucre glace | 911 | 56,48 |
| Pâte de cacao | 220 | 13,64 |
| Composition de protéines de pois | 262 | 16,24 |
| MGLA | 117 | 7,25 |
| Beurre de cacao | 103 | 6,39 |
| Total | 1613 | 689,91 |

2. Broyage (sur broyeuse tri-cylindres) : pression des rouleaux en bars: 1^{er} passage à 20-30, 2^{ème} passage à 35-45, 3^{ème} passage à 55-60.
3. Conchage : température 55°C, durée 20h avec mise en oeuvre des ingrédients figurant dans le tableau 5 :

**Tableau 5**

| *Ingrédients* | Composition (g) |
|---|---|
| Mélange obtenu suite à l'étape de broyage | 1613 |
| Beurre de cacao | 377 |
| Lécithine | 10 |
| Total | 2000 |

Cette recette permet d'obtenir des chocolats au lait dont la composition finale est telle que décrite dans le tableau 6 :

**Tableau 6**

| | | Composition (%) | Ingrédients en poids (g) | MG (%) | Valeur calorique (Kcal) |
|---|---|---|---|---|---|
| Sucre glace | | 45,55 | 911 | 0,00 | 109,32 |
| Pâte de cacao | | 11 | 220 | 5, 94 | 67,10 |
| MGLA | | 5,85 | 117 | 5,85 | 52,65 |
| Composition de protéines de pois | | 13,1 | 262 | 0,00 | 52,40 |
| | *protéines de pois* | *11* | *220* | | |
| Beurre de cacao | | 24 | 480 | 24,00 | 216,00 |
| Lécithine | | 0,5 | 10 | 0,50 | 4,50 |
| Total | | 100 | 2000 | 36,39 | 501,97 |

La teneur en humidité résiduelle du chocolat au lait témoin est négligeable. Par conséquent, le chocolat au lait de l'essai 1 contient 11 % de protéines de pois en poids de produits sec.

### MESURES COMPARATIVES ENTRE L'ESSAI 1 ET LE TEMOIN

### • Mesures rhéologiques

Les mesures de viscosité ont été effectuées à 40 °C sur un rhéomètre Physica MCR 301 selon la norme en vigueur chez les chocolatiers (norme AIOCC).
- Appareil utilisé : Rhéomètre à déformation imposée (PHYSICA^{®} MCR301 - Anton Paar)
- Géométrie utilisée : Cylindres coaxiaux (diamètre 34mm extérieur et 32 mm intérieur.)
- Température : 40°C
- Pré-cisaillement : 10 mn à 5s⁻¹
- Gradient de cisaillement : 1 à 50 s⁻¹ en 3 mn
- Maintien du cisaillement : 1 mn à 50 s⁻¹
- Descente cisaillement : 50 à 1 s⁻¹ en 3 mn
- Résultats : Modélisation selon Casson de la courbe de retour (descente cisaillement).

| | Viscosité Casson (Pa.s) | Seuil d'écoulement (Pa) |
|---|---|---|
| Témoin chocolat au lait | 1,5 | 6,8 |
| Essai 1 substitution totale des protéines de lait | 0,7 | 11,0 |

L'écart observé entre les valeurs de viscosité Casson et de seuil d'écoulement du témoin et de l'essai 1 ne sont pas significatives. La substitution totale des protéines de lait par des protéines de pois ne modifient donc pas significativement le comportement rhéologique des chocolats.

### • Tests d'analyse sensorielle

Les deux échantillons de chocolat au lait, le témoin aux protéines de lait et celui ne contenant que des protéines de pois comme source de protéines, ont été goutés en aveugle par un jury d'experts en analyse sensorielle de 25 personnes.

Le premier test consistait en un test triangulaire où sur les trois échantillons proposés deux étaient identiques. 78% des personnes ayant participés au test n'ont pas pu reconnaître quels étaient les deux échantillons identiques. Aucun des échantillons testés n'a reçu une préférence significative au niveau du jury.

Le second test, toujours réalisé en aveugle, consistait à déguster les deux échantillons et à les décrire. La dégustation est une opération qui consiste à expérimenter, analyser et apprécier les caractères organoleptiques et plus particulièrement les caractères organo-olfactifs d'un produit. La dégustation fait appel aux sens visuel, tactile, olfactif et gustatif. Pour cette dégustation, les qualificatifs employés étaient identiques pour les deux chocolats :
- Test d'observation : surface du chocolat lisse, moirée et légèrement brillante ;
- Test tactile : surface lisse, dure.
- Test olfactif : odeur douce, fruitée, très agréable.
- Test gustatif : onctuosité, rondeur en bouche, crémeux.

Ces deux séries de tests d'analyse sensorielle démontrent parfaitement que le jury entrainé n'a pas su faire de différence entre un chocolat au lait traditionnel et un chocolat ne contenant plus de protéines laitières mais une composition de protéines de pois selon la présente invention. L'intérêt de l'invention est par conséquent démontré.

Cette invention va permettre notamment aux personnes allergiques aux protéines laitières de pouvoir déguster des chocolats aussi bons et onctueux que leurs équivalents contenant des protéines de lait.

Le présent exemple montre de plus qu'un enrichissement en protéines est possible. Ainsi le chocolat essai contient plus de protéines que le chocolat témoin, et la mention « source de protéines » pourra être indiquée sur son emballage.

### Exemple 2 : Substitution totale des protéines de lait dans un caramel au lait (hors invention)

### TEMOIN : CARAMEL AU LAIT TRADITIONNEL

Un caramel au lait traditionnel est réalisé avec les ingrédients suivants :
- Eau,
- Lait écrémé en poudre, commercialisé par la société IDI à Arras (France) constitué de 38 % de protéines et de 53 % de glucides, le reste étant de la matière grasse et de l'eau.
- Matière Grasse végétale hydrogénée de type biscuitine 621, commercialisée par la société LODERS CROKLAAN BV,
- Glycérol monostéarate,
- Glucose de type A4280 S, possédant un Dextrose Equivalent de 42, contenant 20 % d'eau et à faible teneur en SO₂
- Sucre,
- NaCl.

La recette mise en oeuvre est la suivante :

| *Ingrédients* | Ingrédients en poids (g) | Composition (%) |
|---|---|---|
| Eau | 135 | 13,5 |
| Lait écrémé en poudre | 90 | 9 |
| MG Biscuitine 621 | 130 | 13 |
| Glycérol monostéarate | 3 | 0,3 |
| Glucose | 420 | 42 |
| Sucre | 220 | 22 |
| Sel | 2 | 0,2 |
| Total | 1000 | 100 |

### Mode Opératoire

- mélanger le lait écrémé avec l'eau et veiller à avoir une bonne dispersion pour éviter la formation de grumeaux.
- Introduire ensuite le reste des ingrédients tout en continuant de remuer.
- Chauffer progressivement le mélange à feu doux tout en agitant jusqu'à obtenir une température de 120°C.
- Couler ou former.
- Refroidir.
- Papilloter.

Cette recette permet d'obtenir des caramels durs dont la composition finale est telle que décrite dans le tableau 7.

**Tableau 7**

| *Ingrédients* | Composition finale (%) |
|---|---|
| Eau résiduelle | 7 |
| Lait écrémé en poudre | 10,7 |
| *dont protéines de lait* | *4* |
| MG Biscuitine 621 | 15,5 |
| Glycérol monostéarate | 0,36 |
| Glucose | 40 |
| Sucre | 26,2 |
| Sel | 0,24 |
| Total | 100 |

La teneur en eau résiduelle étant de 7%, le caramel témoin contient 4,3 % de protéines de lait en poids de produits sec.

### ESSAI 1 : CARAMEL AU LAIT AUX PROTEINES DE POIS

On réalise un caramel au lait à partir de la recette traditionnelle du témoin, dans lequel les protéines de lait ont été substituées totalement par des protéines de pois. Les ingrédients mis en oeuvre sont les mêmes, sauf :
- Composition de protéines de pois : 85 % (sec) de protéines de pois,

Le lait écrémé en poudre a été supprimé de la recette. Pour compenser le lactose, la matière grasse et l'eau apportés initialement par cet ingrédient dans la formulation du témoin, de la matière grasse de type MG biscuitine, du sucre et de l'eau ont donc été rajoutés aux ingrédients de base.

La recette mise en oeuvre pour cet essai est la suivante :

| *Ingrédients* | Ingrédients en poids (g) | Composition (%) |
|---|---|---|
| Eau | 139,5 | 13,9 |
| Composition de protéines de pois | 36,9 | 3,7 |
| MG Biscuitine 621 | 130,9 | 13,1 |
| Glycérol monostéarate | 3 | 0,3 |
| Glucose | 420 | 42 |
| Sucre | 267,7 | 26,8 |
| Sel | 2 | 0,2 |
| Total | 1000 | 100 |

Le procédé de préparation est similaire à celui mis en oeuvre pour la réalisation du témoin et décrit ci-dessus.

Cette recette permet d'obtenir des caramels durs dont la composition finale est telle que décrite dans le tableau 8.

**Tableau 8**

| *Ingrédients* | Composition finale (%) |
|---|---|
| Eau résiduelle | 8,65 |
| Composition de protéines de pois | 4,35 |
| dont *protéines de pois* | 3, 7 |
| MG Biscuitine 621 | 15,4 |
| Glycérol monostéarate | 0,35 |
| Glucose | 39,5 |
| Sucre | 31,5 |
| Sel | 0,25 |
| Total | 100 |

La teneur en eau résiduelle étant de 8,65 %, le caramel de l'essai 1 contient 4,1 % de protéines de pois en poids de produits sec.

### • Tests d'analyse sensorielle

Les deux échantillons de caramel, le témoin aux protéines de lait et celui ne contenant que des protéines de pois comme source de protéines, ont été goutés en aveugle par un jury d'experts en analyse sensorielle de 25 personnes, selon les mêmes tests que ceux décrits dans l'exemple 1 précédent.

Le premier test consistait en un test triangulaire où sur les trois échantillons proposés deux étaient identiques. 81% des personnes ayant participés au test n'ont pas pu reconnaître quels étaient les deux échantillons identiques. Aucun des échantillons testés n'a reçu une préférence significative au niveau du jury.

Le second test, toujours réalisé en aveugle, consistait à déguster les deux échantillons et à les décrire. Pour cette dégustation, les qualificatifs employés étaient identiques pour les deux caramels :
- Test d'observation : couleur (intensité de la coloration brun), surface du caramel lisse et légèrement brillante ;
- Test tactile : surface lisse, dure, souple.
- Test olfactif : odeur douce, beurrée, lactée, très agréable.
- Test gustatif : onctuosité, rondeur en bouche, crémeux, côté lacté.

Ces deux séries de tests d'analyse sensorielle démontrent parfaitement que le jury entrainé n'a pas su faire de différence entre un caramel au lait traditionnel et un caramel ne contenant plus de protéines laitières mais une composition de protéines de pois selon la présente invention. Le qualificatif « lacté » a même été employé dans le caramel ne contenant plus de protéines laitières.

L'intérêt de l'invention est par conséquent démontré.

### Exemple 3 : Substitution totale des protéines de lait dans un caramel au lait en utilisant un lait végétal contenant des protéines de pois (hors invention)

### TEMOIN : CARAMEL AU LAIT TRADITIONNEL

Un caramel au lait traditionnel est réalisé avec les mêmes ingrédients que ceux utilisés dans l'exemple 2, excepté le lait écrémé en poudre qui diffère de par sa composition et le NaCl qui n'est pas présent dans cet exemple.

Le lait écrémé en poudre utilisé dans cet exemple est commercialisé par la société IDI à Arras (France) et est constitué de 26 % de protéines, de 40% de glucides, le reste étant de la matière grasse et de l'eau (les pourcentages étant exprimés en poids sur sec).

La recette mise en oeuvre est la suivante :

| *Ingrédients* | Ingrédients en poids (g) | Composition (%) |
|---|---|---|
| Eau | 93 | 9,3 |
| Lait écrémé en poudre | 140 | 14 |
| MG Biscuitine 621 | 69,5 | 6,95 |
| Glycérol monostéarate | 2,5 | 0,25 |
| Glucose | 417 | 41,7 |
| Sucre | 278 | 27,8 |
| Total | 1000 | 100 |

### Le mode opératoire employé est identique à celui décrit pour l'exemple 2.

Cette recette permet d'obtenir des caramels durs dont la composition finale est telle que décrite dans le tableau 9.

**Tableau 9**

| *Ingrédients* | Composition finale *(%) |
|---|---|
| Eau résiduelle | 9 |
| Lait écrémé en poudre | 5,1 |
| *dont protéines de lait* | 1,33 |
| MG Biscuitine 621 | 8,7 |
| Glycérol monostéarate | 0,3 |
| Glucose | 42 |
| Sucre | 34,9 |
| Total | 100 |

### ESSAI 1 : CARAMEL AU LAIT AUX PROTEINES DE POIS

On réalise un caramel au lait à partir de la recette traditionnelle du témoin, dans lequel les protéines de lait ont été substituées totalement par des protéines de pois, elles-mêmes apportées par un lait végétal.

### A. Préparation du lait végétal

• Le lait végétal est préparé selon la recette ci-dessous. La composition de protéines de pois NUTRALYS^{®} S utilisée contient 85% sur sec de protéines de pois.

| | Composition Mise en oeuvre (g) | Sec (%) |
|---|---|---|
| Protéines de pois NUTRALYS^{®} S | 4,95 | 4, 70 |
| Maltodextrine GLUCIDEX ^{®} 19 | 6,93 | 146,58 |
| Huile de tournesol | 1,58 | 1, 58 |
| Eau | 86,54 | - |
| Total | 100 | 12,87 |

### • Mode opératoire de préparation du lait végétal

- L'eau a été chauffée à 65°C.
- Les protéines de pois et la maltodextrine GLUCIDEX^{®} DE 19 ont été ajoutées à l'eau, et l'ensemble a été laissé au minimum 30 minutes à température ambiante afin de permettre une bonne hydratation des deux produits ajoutés.
- L'huile de tournesol a été ajoutée progressivement au mélange précédent, sous agitation grâce à un agitateur de type POLYTRON^{®}, à une vitesse de 4000 tours/min. L'agitation a été maintenue pendant 2 minutes.
- Le mélange précédent a ensuite été homogénéisé grâce à un homogénéisateur NIRO^{®} Soavi (groupe GEA), à une pression de 250 bars.
- L'émulsion ainsi obtenue a ensuite été stérilisée sur un mini-cuiseur en positionnant le repère moteur de façon à ce que le lait végétal ait une température de sortie comprise entre 135 et 140°C. La température de consigne du cuiseur était de 190°C et le repère moteur a été positionné sur 3,5.

### • Informations Nutritionnelles sur le lait végétal obtenu

| | |
|---|---|
| Protéines/sec | 4% |
| Glucides/sec | 6,73% |
| Lipides | 1,89% |

### B. Préparation de la confiserie au lait végétal

On réalise un caramel au lait à partir de la recette traditionnelle du témoin, dans lequel les protéines de lait ont été substituées totalement par des protéines de pois apportées par le lait végétal préparé tel que décrit ci-dessus.
L'eau est apportée par le lait de pois.

La recette mise en oeuvre est la suivante :

| *Ingrédients* | Ingrédients en poids (g) | Composition (%) |
|---|---|---|
| Eau | 0 | - |
| Lait végétal de pois | 254,5 | 25,5 |
| MG Biscuitine 621 | 72,5 | 7,2 |
| Glycérol monostéarate | 2,3 | 0,2 |
| Glucose | 402,3 | 40,2 |
| Sucre | 268,4 | 26,9 |
| Total | 1000 | 100 |

Le procédé de préparation est similaire à celui mis en oeuvre pour la réalisation du témoin et décrit ci-dessus.

Cette recette permet d'obtenir des caramels durs dont la composition finale est telle que décrite dans le tableau 10.

**Tableau 10**

| *Ingrédients* | Composition finale (%) |
|---|---|
| Eau résiduelle | 9 |
| Lait végétal | 4,3 |
| *dont protéines de pois* | 1,33 |
| MG Biscuitine 621 | 9,4 |
| Glycérol monostéarate | 0,3 |
| Glucose | 42 |
| Sucre | 35 |
| Total | 100 |

### C. Tests d'analyse sensorielle

Les deux échantillons de caramel, le témoin aux protéines de lait et celui ne contenant que des protéines de pois apportées par un lait végétal ont été goutés en aveugle par un jury d'experts en analyse sensorielle de 25 personnes, selon les mêmes tests que ceux décrits dans l'exemple 1 de la présente invention.

Le premier test consistait en un test triangulaire où sur les trois échantillons proposés deux étaient identiques. 83% des personnes ayant participés au test n'ont pas pu reconnaître quels étaient les deux échantillons identiques. Aucun des échantillons testés n'a reçu une préférence significative au niveau du jury.

Le second test, toujours réalisé en aveugle, consistait à déguster les deux échantillons et à les décrire. Pour cette dégustation, les qualificatifs employés étaient identiques pour les deux caramels :
- Test d'observation : couleur (intensité de la coloration brun), surface du caramel lisse et légèrement brillante ;
- Test tactile : surface lisse, dure, souple.
- Test olfactif : odeur douce, beurrée, lactée, très agréable.
- Test gustatif : onctuosité, rondeur en bouche, crémeux, côté lacté.

Ces deux séries de tests d'analyse sensorielle démontrent parfaitement que le jury entrainé n'a pas su faire de différence entre un caramel au lait traditionnel et un caramel ne contenant plus de protéines laitières mais une composition de protéines de pois apporté par un lait végétal selon la présente invention. Le qualificatif « lacté » a même été employé dans le caramel ne contenant plus de protéines laitières.
L'intérêt de l'invention est par conséquent démontré.

## Revendications

1. Confiserie traditionnellement au lait choisie dans le groupe constitué des crumbs, des chocolats blancs ou au lait et des produits dérivés du chocolat blanc ou au lait choisis parmi les ganaches, les pralines, les chocolats de couverture, les tablettes, les bonbons, les bouchées, les truffes, les lentilles, les vermicelles et les fourrages au chocolat blanc ou au lait, ladite confiserie comprenant de 0,5 % à 16 % de protéines de pois, de façon préférée de 1 % à 16 %, de façon encore plus préférée de 2 % à 16 %, les pourcentages étant exprimés en poids sec, par rapport au poids sec total de la confiserie.

2. Confiserie selon la revendication 1, **caractérisée en ce qu'**elle comprend moins de 30 % de protéines de lait, de façon préférée de 0 % à 20 %, de façon encore plus préférée de 0 % à 16 %, les pourcentages étant calculés en poids, par rapport au poids total de la confiserie.

3. Confiserie selon la revendication 1 ou 2, **caractérisée en ce que** le rapport en poids (protéines de lait)/(protéines de pois) dans ladite confiserie est compris entre 0 et 2, de façon préférée entre 0 et 1, de façon encore plus préférée entre 0 et 0,5.

4. Confiserie selon l'une quelconque des revendications 1 à 3, **caractérisée en ce qu'**elle est exempte de protéines de lait.

5. Confiserie selon l'une quelconque des revendications 1 à 4, **caractérisée en ce qu'**elle comprend en outre une fibre végétale.

6. Confiserie selon la revendication 5, **caractérisée en ce qu'**elle comprend des maltodextrines branchées.

7. Procédé de préparation de confiseries définies dans l'une quelconque des revendications 1 à 6, ledit procédé comprenant l'étape consistant à cuire une préparation de confiseries traditionnellement au lait comprenant des protéines de pois.

## Patentansprüche

1. Traditionelle Süssware aus Milch, ausgewählt aus der Gruppe, bestehend aus weichem oder hartem Crumbs, weißen Schokoladen oder Milchschokoladen und Produkten die auf weiße oder Milchschokolade zurückgehen, ausgewählt aus Ganachen, Pralinen, Kuvertüreschokoladen, Tafeln, Bonbons, Häppchen, Trüffeln, Linsen, Vermicelles und Füllungen aus weißer Schokolade oder Milchschokolade, wobei die Süssware von 0,5 % bis 16 % Erbsenproteine enthält, vorzugsweise von 1 % bis 16 %, noch mehr bevorzugt von 2 % bis 16 %, wobei die Prozentanteile in Trockenmasse bezüglich des Gesamtgewichts der Süssware angegeben sind.

2. Süssware nach Anspruch 1, **dadurch gekennzeichnet, dass** sie weniger als 30 % Milchproteine enthält, vorzugsweise von 0 % bis 20 %, noch mehr bevorzugt von 0 % bis 16 %, wobei die Prozentanteile als Trockenmasse bezüglich des Gesamtgewichts der Süssware angegeben sind.

3. Süssware nach Anspruch 1 oder 2, **dadurch gekennzeichnet, dass** das Gewichtsverhältnis (Milchproteine)/(Erbsenproteine) in der Süssware zwischen 0 und 2 Prozent umfasst, vorzugsweise zwischen 0 und 1, noch mehr bevorzugt zwischen 0 und 0,5.

4. Süssware nach einem der Ansprüche 1 bis 3, **dadurch gekennzeichnet, dass** sie frei von Milchproteinen ist.

5. Süssware nach einem der Ansprüche 1 bis 4, **dadurch gekennzeichnet, dass** sie weiterhin eine Pflanzenfaser umfasst.

6. Süssware nach Anspruch 5, **dadurch gekennzeichnet, dass** sie verzweigte Maltodextrine umfasst.

7. Verfahren zur Herstellung von definierten Süsswaren nach einem der Ansprüche 1 bis 6, wobei das Verfahren den Schritt des Kochens einer Zubereitung für Süsswaren umfasst, die traditionell aus Milch sind, welche Erbsenproteine enthält.

## Claims

1. Confectionery traditionally made with milk selected from crumbs, white chocolate or milk chocolate and products derived from white chocolates or milk chocolates selected from ganaches, pralines, couverture chocolates, bars, candies, bouchées, truffles, lentils, sprinkles and white-chocolate or milk-chocolate fillings, said confectionery comprising 0.5% to 16% of pea proteins, preferably 1% to 16%, even more preferably 2% to 16%, the percentages being expressed in dry weight, relative to the total dry weight of the confectionery.

2. Confectionery according to Claim 1, **characterized in that** it comprises less than 30% of milk proteins, preferably 0% to 20%, even more preferably 0% to 16%, the percentages being calculated by weight, relative to the total weight of the confectionery.

3. Confectionery according to Claim 1 or 2, **characterized in that** the weight ratio (milk proteins)/(pea proteins) in said confectionery is between 0 and 2, preferably between 0 and 1, even more preferably between 0 and 0.5.

4. Confectionery according to any one of Claims 1 to 3, **characterized in that** it is free from milk proteins.

5. Confectionery according to any one of Claims 1 to 4, **characterized in that** it additionally comprises a vegetable fibre.

6. Confectionery according to Claim 5, **characterized in that** it comprises branched maltodextrins.

7. Method of preparation of confectionery products defined in any one of Claims 1 to 6, said method comprising the stage consisting of cooking a confectionery preparation traditionally made with milk comprising pea proteins.
